# EUROPEAN PATENT APPLICATION

(11) **EP 4 454 801 A1**
(43) Date of publication of application: **30.10.2024**
(21) Application number: 22910484.9
(22) Date of filing: 16.09.2022
(51) Int. Cl.: B23K 26/10, B23K 26/16, B23K 26/70

(54) **PROCESSING DEVICE AND METHOD FOR MANUFACTURING PROCESSED ARTICLE**

(30) Priority: 23.12.2021 JP 2021209386
(71) Applicant: Towa Corporation, Kyoto-shi, Kyoto 601-8105 (JP)
(72) Inventor: OKAMOTO, Jun, Kyoto-shi, Kyoto 6018105 (JP)
(74) Representative: Müller Hoffmann & Partner
(86) International application number: PCT/JP2022/034666
(87) International publication number: WO 2023/119758

(57) **Abstract**

The present invention is intended to suppress the damages of a machining table caused by a laser beam and to alleviate the restriction of laser machining conditions for preventing damage to the machining table, and includes: machining tables 2A, 2B that are enabled to be turned over and each of which has one surface 2x provided with a plurality of suction holes 2h allowing a workpiece W to be suctioned; and laser beam output units 41A, 41B that machine the workpiece W suctioned on the machining tables 2A, 2B by irradiating the workpiece W with a laser beam. Each of the machining tables 2A, 2B has a plurality of through openings 2T through which the laser beam is allowed to pass, from the one surface 2x to the other surface 2y of the machining table 2A, 2B.

## Description

### Technical Field

The present invention relates to a machining apparatus and a method for manufacturing machined articles.

### Background Art

Conventionally having been come up is as a laser machining apparatus for cutting a plate-shaped workpiece that includes a base material having a protective layer on the surface by turning over the plate-shaped workpiece, and irradiating the plate-shaped workpiece with a laser from both sides, as disclosed in Patent Literature 1.

Such a laser machining apparatus includes, separately from a chuck table, a switching mechanism that turns over a plate-shaped workpiece having a divided protective layer. The plate-shaped workpiece having been turned over by the switching mechanism is then suctioned and held by a holding plate placed on the chuck table or by a second chuck table. This holding plate or the second chuck table has groove-like gaps corresponding to the lines along which the plate-shaped workpiece is to be divided. In this configuration, the laser beam having completely cut through the plate-shaped workpiece goes into the groove-like gap formed on the holding plate or the second chuck table.

### Citation List

### Patent Literature

Patent Literature 1: JP 2016-25112 A

### Summary of Invention

### Technical Problem

However, in the laser machining apparatus described above, once the laser beam completely cuts through the plate-shaped workpiece, the surface of the groove-like gap is irradiated with the laser beam. The laser beam having entered the groove-shaped gap may then damage the holding plate or the second chuck table. To prevent the laser beam having entered the groove-shaped gap from damaging the holding plate or the second chuck table, it is necessary to impose restrictions on the conditions of the laser processing, e.g., the energy density of the laser beam.

The present invention has been made to solve the problems described above, and a main object of the present invention is to suppress damages of a machining table caused by to the laser beam, and to alleviate the restrictions imposed on the laser processing conditions for preventing damages to the machining table.

### Solution to Problem

That is, a machining apparatus according to the present invention includes: a machining table that is enabled to be turned over and that has one surface provided with a plurality of suction holes allowing a workpiece to be suctioned; and a laser beam output unit that machines the workpiece suctioned on the machining table by irradiating the workpiece with a laser beam, in which the machining table has a plurality of through openings through which the laser beam is allowed to pass, from one surface to another surface of the machining table. Advantageous Effect of Invention

According to the present invention configured as described above, it is possible to suppress damages of a machining table caused by the laser beam, and to alleviate the restrictions imposed on the laser processing conditions for preventing damages to the machining table. Brief Description of Drawings

FIG. 1 is a plan view illustrating an example of a workpiece (sealed substrate).
FIG. 2 is a diagram schematically illustrating a configuration of a cutting apparatus according to an embodiment of the present invention.
FIG. 3 is a perspective view illustrating a cutting table and a table reversing mechanism according to the embodiment.
FIG. 4 is a cross-sectional view passing through the suction holes in the cutting table and the table reversing mechanism according to the embodiment.
FIG. 5 is a plan view illustrating positional relationships between through openings, the suction holes, and a suction channel according to the embodiment.
FIG. 6 is an enlarged exploded perspective view of a part of the cutting table according to the embodiment.
FIG. 7(a) is an enlarged cross-sectional view of a part of the cutting table according to the embodiment, along a direction orthogonal to the direction in which a laser beam is scanned, and FIG. 7(b) is an enlarged cross-sectional view of a part of the cutting table along the direction in which a laser beam is scanned.
FIG. 8 is a schematic diagram illustrating the sequence of laser cutting and swarf removal according to the embodiment.
FIG. 9 is a schematic diagram illustrating a configuration and an operation for correcting warpage of a sealed substrate, according to a modification of the embodiment.
FIG. 10 is a schematic diagram illustrating operations from correcting the warpage of the sealed substrate to cutting the sealed substrate, according to the modification of the embodiment.

### Description of Embodiment

The present invention will now be explained more in detail using some examples. However, the following description is not intended to limit the scope of the present invention in any way.

As described above, a machining apparatus according to the present invention includes: a machining table that is enabled to be turned over and that has one surface provided with a plurality of suction holes allowing a workpiece to be suctioned; and a laser beam output unit that machines the workpiece suctioned on the machining table by irradiating the workpiece with a laser beam, in which the machining table has a plurality of through openings through which the laser beam is allowed to pass, from one surface to another surface of the machining table.

In this machining apparatus, because the machining table has a plurality of through openings enabling the laser beam to pass, when the workpiece is machined by irradiating a portion corresponding to the through opening with the laser beam, the laser beam is allowed to pass through the through opening, so that the laser beam is prevented from hitting the machining table, advantageously. As a result, it is possible to suppress damages of the machining table, resultant of being irradiated with a laser beam, to lessen the contaminants (impurities, foreign matters) becoming adhered to the workpiece due to the damages, and to alleviate the restrictions imposed on laser machining conditions for preventing damages of the machining table. Because the restrictions imposed on the laser machining conditions can be alleviated, it becomes possible to use higher pulse energy and average output. Therefore, it is possible to shorten the machining time and to improve productivity, advantageously.

In addition, because the laser beam passes through the through opening, it is possible to prevent the laser beam from becoming reflected on the machining table, and causing the workpiece to be irradiated therewith; therefore, it is also possible to suppress damages of the workpiece resultant of the laser beam reflected on the machining table.

Furthermore, because the workpiece can be machined from both sides of the workpiece by turning over the machining table with the workpiece suctioned thereto, it is possible to reduce the machining time and to improve the productivity.

In addition, because the machining table is turned over (turned upside down) while the machining table is holding the workpiece, by collecting a measurement of the amount of the positional shift resultant of turning over the machining table once in advance, it becomes possible to correct the position after the reversal through calculation. Therefore, it is not necessary to align the amount of shift (adjust the position) every time a workpiece is turned over. Therefore, the alignment (positional adjustment) of the laser beam output unit with respect to the workpiece is required only once after the workpiece is suctioned, and this also contributes in the reduction in the machining time and improvement in the productivity.

The laser beam is focused on the workpiece suctioned to the machining table. Therefore, while one surface of the machining table is facing the laser beam output unit (that is, before the machining table is turned over), the laser beam having passed through the workpiece diverges inside the through opening toward the other surface of the machining table. By contrast, while the other surface of the machining table is facing the laser beam output unit (that is, after the machining table is turned over), the laser beam converges toward the one surface of the machining table inside the through opening.

In either one of these conditions, not only the machining table becomes damaged as the laser beam hits the inner surface of the through opening, but also the workpiece may become damaged as the reflected laser beam hits an unintended area of the workpiece.

In order to suitably solve this problem, it is preferable for the through opening to have a shape becoming larger from the one surface toward the other surface.

When the machining table is turned over, the position of the workpiece may become upside down. In order to machine the workpiece by irradiating the workpiece with the laser beam not only before but also after the machining table is reversed, the machining apparatus according to the present invention preferably further includes a position changing mechanism that changes a relative position between the machining table and the laser beam output unit before and after the machining table is reversed.

When the tool for cutting workpieces having an existing product layout is switched from a blade to a laser beam, it is necessary to maintain the same kerf width (the width to be removed by cutting), in order to keep the package size the same. Because the kerf width of the laser beam is smaller than the kerf width of a blade, the workpiece is usually cut with two or more cutting lines. For this reason, swarf such as a long unwanted material may be formed between the packages. This swarf may then remain unremoved from the workpiece.

In order to remove the swarf from the cut workpiece, the machining apparatus according to the present invention preferably further includes a removal mechanism for removing the swarf remaining on the workpiece machined with the laser beam.

In order to collect the swarf such as the unwanted material using a simple configuration, the machining apparatus according to the present invention preferably further includes a swarf container that collects the swarf resultant of machining with the laser beam, the swarf container being disposed below the machining table.

In order to enable various kinds of processing to be performed on the workpiece, the machining apparatus preferably includes a plurality of machining tables having the plurality of through openings at different positions, respectively.

For example, when it is desirable to machine the workpiece into a lattice-like shape, if a machining table are provided with the through-openings in a lattice-like shape, too, such a machining table would fail as a structure. In such a case, two machining tables may be used so that one of the machining tables is configured to machine in the first direction (for example, the X direction), and the other machining table is configured to machine in the second direction (for example, the Y direction) that is orthogonal to the first direction. With such a configuration, it is possible to provide the one machining table with the through openings in the first direction (X direction), and to provide the other machining table with the through openings along the second direction (Y direction).

One example of the workpiece is a resin-sealed substrate. Such a sealed substrate warps more when the thickness of the resin is greater. When a sealed substrate is warped, it becomes difficult to suction the substrate to the machining table. Therefore, the machining apparatus according to the present invention preferably further include a pressing unit that is provided to the machining table, and that presses both ends of the workpiece toward the machining table.

With such a configuration, both ends of the workpiece are pressed toward the machining table by the pressing unit, so that it becomes possible to suction the workpiece reliably to the machining table.

The machining apparatus according to the present invention preferably includes a transport mechanism that transports the workpiece to the machining table, and a heating stage that heats the workpiece before being transported onto the machining table, and the transport mechanism conveys the workpiece heated by the heating stage to the machining table.

With this configuration, because the workpiece is heated by the heating stage before being transported to the machining table, the workpiece is made more deformable, so that the workpiece can be suctioned reliably onto the machining table.

As a specific embodiment of the workpiece, the workpiece may be a resin-sealed electronic element such as a semiconductor chip fixed to a support body such as a lead frame or a printed wiring board.

A method for manufacturing a machined article using the machining apparatus is also one aspect of the present invention.

As a specific embodiment of the method for manufacturing a machined article, preferably, the workpiece is cut from both sides by turning over the machining table holding the workpiece, and by irradiating the workpiece with a laser beam.

Because the workpiece is cut by turning over the machining table and irradiating both sides of the workpiece with a laser beam, it is not necessary to transfer the workpiece to turn over the workpiece. Therefore, the machining time such as that required in cutting is reduced, and the productivity is improved, advantageously. In addition, because the workpiece is machined from both sides, it is possible to reduce the depth by which the workpiece is machined from one side. Therefore, it is possible to make the required kerf width smaller. As a result, the number of laser scanning lines can reduced, and the productivity is improved. Furthermore, it becomes possible to reduce the pitch size between the packages of the workpiece. Therefore, it becomes possible to use a layout with a larger number of packages, so that the number of packages per frame is increased and the productivity is improved, accordingly. Furthermore, by performing machining from both sides, it is possible to alleviate the tapered shape resultant of laser machining, so that the quality is also improved.

### <One embodiment of present invention>

A machining apparatus according to one embodiment of the present invention will now be explained with reference to some drawings. Note that, to facilitate understanding, all of the drawings described below are schematic representations, with some omissions and exaggerations made as appropriate. The same elements are denoted by the same reference numerals, and the descriptions thereof will be omitted as appropriate.

### <Overall configuration of machining apparatus>

A machining apparatus 100 according to this embodiment is a cutting apparatus for cutting a sealed substrate W, which is a workpiece, to dice the sealed substrate W into a plurality of products P that are machined articles.

The sealed substrate W is a support body having at least electronic elements fixed thereto, such as semiconductor chips, resistor elements, and capacitor elements, sealed with resin. As the support body, it is possible to use a lead frame or a substrate such as a printed wiring board, as well as a semiconductor substrate (including a semiconductor wafer such as a silicon wafer), a metal substrate, a ceramic substrate, a glass substrate, or a resin substrate. The substrate of the sealed substrate W may include or not include wiring.

One surfaces of the sealed substrate W and the products P according to this embodiment serve as mounting surfaces to be mounted in a subsequent process. In the description of this embodiment, the one surface to be mounted in the subsequent process will be referred to as a "mounting surface", and the surface on the opposite side of the mounting surface will be referred to as a "mark surface".

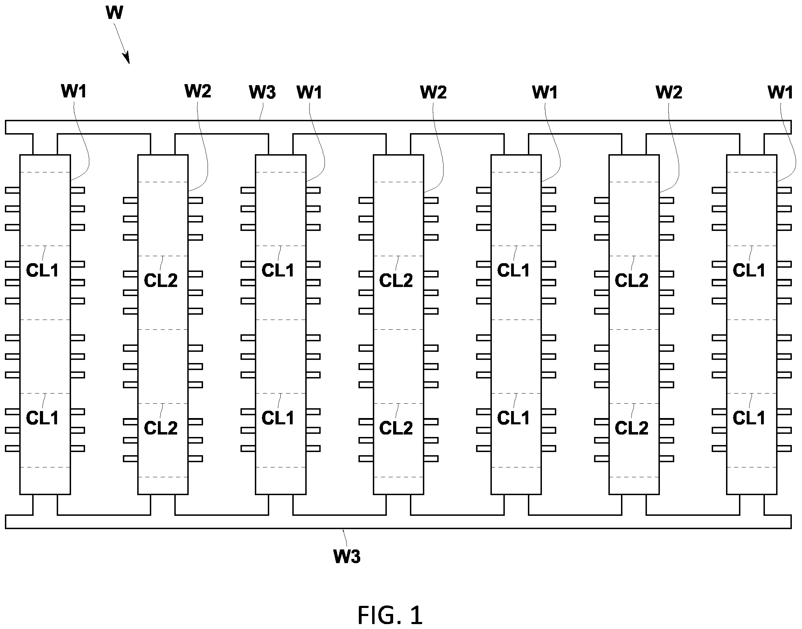

As illustrated in FIG. 1, the sealed substrate W includes a plurality of strips W1, W2 that are connected by a connector W3. The adjacent strips W1, W2 have cut lines CL1, CL2, respectively, that are set along the straight lines that are offset from each other, respectively. Each of the strips W1, W2 is an arrangement of a plurality of packages arranged in a row, each package including an electronic element that is resin-molded and sealed thereby. Each of such packages (electronic elements) has leads corresponding thereto. The connectors W3 connect the respective ends of the plurality of strips W1, W2. Specifically, the leads of the strips W1 at the odd-numbered columns and those in the strips W2 at the even-numbered columns are disposed in a staggered fashion. As a result, the cut lines CL1 on the strips W1 at the odd-numbered columns are aligned along the same lines, respectively. The cut lines CL2 on the strips W2 at the even-numbered columns are aligned with the same lines, respectively. The cut lines CL1 on the strips W1 at the odd-numbered columns are aligned along the lines that are offset from those along which the cut lines CL2 on the strips W2 at the even-numbered columns are aligned. Note that the cut lines CL1, CL2 illustrated in FIG. 1 are virtual lines to be cut, and are not marked on the actual sealed substrates W.

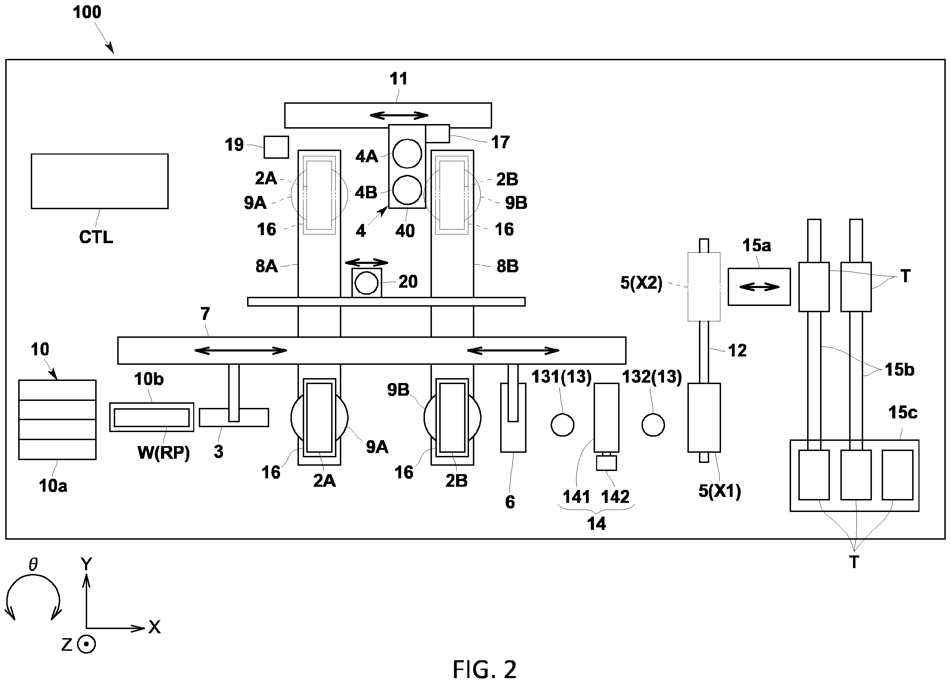

Specifically, as illustrated in FIG. 2, the cutting apparatus 100 includes: two cutting tables (machining tables) 2A, 2B each of which holds a sealed substrate W; a first pickup mechanism 3 that picks up a sealed substrate W to be transported onto the cutting table 2A, 2B; a cutting mechanism (machining mechanism) 4 that cuts the sealed substrates W on the cutting table 2A, 2B; a transfer table 5 onto which a plurality of products P are transferred; a second pickup mechanism 6 that picks up a plurality of products P, and transfers the plurality of products P from the cutting tables 2A, 2B onto the transfer table 5; and a transport actuator mechanism 7 for moving the first pickup mechanism 3 and the second pickup mechanism 6. Note that the first pickup mechanism 3 and the transport actuator mechanism 7 makes up a transport mechanism (loader) that transfers a sealed substrate W, and the second pickup mechanism 6 and the transport actuator mechanism 7 together make up a transport mechanism (unloader) that transfers the plurality of products P.

In the description hereunder, directions orthogonal to each other on a plane extending along the top surfaces of the cutting tables 2A, 2B (horizontal plane) are defined as an X direction and a Y direction, and a vertical direction orthogonal to the X direction and the Y direction is defined as a Z direction. Specifically, the horizontal direction and the vertical direction in FIG. 2 are defined as the X direction (first direction) and the Y direction (second direction), respectively.

### <Cutting tables 2A, 2B>

The two cutting tables 2A, 2B are configured to suction and hold the sealed substrate W, and are provided in a manner movable at least in the Y direction. The cutting table 2A is enabled to move in the Y direction by a cutting actuator mechanism 8A, and is enabled to rotate in the θ direction by a rotating mechanism 9A. The cutting table 2B is enabled to move in the Y direction by a cutting actuator mechanism 8B, and is enabled to rotate in the θ direction by a rotating mechanism 9B. Specific configurations of the cutting tables 2A, 2B will be described later.

### <First pickup mechanism 3>

As illustrated in FIG. 2, the first pickup mechanism 3 picks up a sealed substrate W to transport the sealed substrate W from a substrate feeder mechanism 10 onto the cutting tables 2A, 2B. The first pickup mechanism 3 includes a plurality of suction portions (not illustrated) for suctioning and holding the sealed substrates W. By moving the first pickup mechanism 3 to a desired position using the transport actuator mechanism 7 to be described later, for example, sealed substrates W are transported from the substrate feeder mechanism 10 to the cutting tables 2A, 2B.

As illustrated in FIG. 2, the substrate feeder mechanism 10 includes a substrate housing 10a where a plurality of sealed substrates W from outside are stored, and a substrate feeder unit 10b that moves the sealed substrate W from the inside of the substrate housing 10a to a pickup position RP where the first pickup mechanism 3 suctions to pick up the sealed substrate W.

### <Cutting mechanism 4>

As illustrated in FIG. 2, the cutting mechanism 4 is configured to irradiate the sealed substrate W suctioned to the cutting tables 2A, 2B with a laser beam to cut the sealed substrate W, and includes two laser beam output units 41A, 41B.

The two laser beam output units 41A, 41B are provided along the Y direction, and are enabled to output laser beams independently. Each of the laser beam output units 41A, 41B includes a laser oscillator, a laser beam scanning unit such as a galvano scanner that linearly scans the laser from the laser oscillator, and a condenser lens that condenses the laser beam. In each of the laser beam output units 41A, 41B, the laser beam is condensed by the condenser lens on the sealed substrate W suctioned to the cutting tables 2A, 2B, and the sealed substrate W suctioned to the cutting tables 2A, 2B is linearly scanned by the laser beam scanning unit.

In the present embodiment, the two laser beam output units 41A, 41B are provided to a single machining head 40, and the machining head 40 is enabled to move between the two cutting tables 2A, 2B along the X direction, by the machining head actuator mechanism 11. The machining head actuator mechanism 11 can also move the machining head 40 in the Y direction and the Z direction. The two laser beam output units 41A, 41B may also be configured to be movable at least in the X direction or the Y direction with respect to the machining head 40. Note that the two laser beam output units 41A, 41B may be configured to be independently movable between the two cutting tables 2A, 2B.

To cut on the cutting table 2A, the cutting table 2A and the two laser beam output units 41A, 41B are moved relatively to each other to scan the laser beam, and the sealed substrate W is cut and diced thereby. To cut on the cutting table 2B, the cutting table 2B and the two laser beam output units 41A, 41B are moved relatively to each other to scan the laser beam, and the sealed substrate W is cut and diced thereby. Note that the cutting process on the cutting table 2A and the cutting process on the cutting table 2B can be performed alternatingly.

### <Transfer table 5>

As illustrated in FIG. 2, the transfer table 5 according to this embodiment is a table to which a plurality of products P, having been inspected by an inspection unit 13 to be described later, are transferred. The transfer table 5 is what is called an indexing table, and a plurality of products P are placed thereon temporarily, before the plurality of products P are sorted and stored on various trays T. The transfer table 5 is also provided in a manner movable back and forth in the Y direction. The transfer table 5 is then moved, by a transfer actuator mechanism 12, between a transfer position X1 where the plurality of products P are placed by the second pickup mechanism 6, and a pickup position X2 where the plurality of products P are transported by the sorting mechanism 15a.

The sorting mechanism 15a then sorts the plurality of products P placed on the transfer table 5 onto the various trays T, based on the result of the inspection carried out by the inspection unit 13 (e.g., non-defective products and defective products). The various trays T are transferred, by a tray actuator mechanism 15b, from a tray storage 15c to a desired pickup position X2, where products P sorted by the sorting mechanism 15a are placed. The tray actuator mechanism 15b then stores various trays T having the products sorted thereon in the tray storage 15c. In the present embodiment, the tray storage 15c is configured to store three types of trays T, for example, a tray T before the products P are stored, a tray T storing therein non-defective product P, and a tray T storing therein the defective products P that requires rework.

### inspection unit 13>

The inspection unit 13 is provided between the cutting tables 2A, 2B and the transfer table 5, as illustrated in FIG. 2, and inspects a plurality of products P held by the second pickup mechanism 6. The inspection unit 13 according to this embodiment includes a first inspection unit 131 inspecting the mark surface of the product P, and a second inspection unit 132 inspecting the mounting surface of the product P. The first inspection unit 131 is an imaging camera including an optical system for inspecting the mark surface, and the second inspection unit 132 is an imaging camera including an optical system for inspecting the mounting surface. Note that the first inspection unit 131 and the second inspection unit 132 may be the same unit.

To enable the inspection unit 13 to inspect both of the surfaces of the plurality of products P, the inspection unit 13 includes a reversing mechanism 14 for reversing the plurality of products P (see FIG. 2). The reversing mechanism 14 includes a holding table 141 holding a plurality of products P, and a reversing unit 142, such as a motor for turning over the holding table 141. The reversing mechanism 14 is enabled to move to the transfer table 5 by a reversing actuator mechanism (not illustrated) that moves the reversing mechanism 14 in the X direction.

When the second pickup mechanism 6 picks up the plurality of products P from the cutting tables 2A, 2B, the products P have their mark surfaces facing downwards. The first inspection unit 131 inspects the mark surfaces of the plurality of respective products P while the products P are being transported from the cutting tables 2A, 2B to the reversing mechanism 14. The reversing mechanism 14 then reverses the plurality of products P held by the second pickup mechanism 6, and the reversing actuator mechanism then moves the reversing mechanism 14 to the position of the transfer table 5. During this time of movement, the second inspection unit 132 inspects the mounting surfaces of the respective products P that are facing downwards. The products P are then passed onto the transfer table 5.

### <Second pickup mechanism 6>

As illustrated in FIG. 2, the second pickup mechanism 6 picks up the plurality of products P, and transfers the plurality of products P from the cutting table 2A, 2B to the reversing mechanism 14. This second pickup mechanism 6 includes a plurality of suction portions (not illustrated) for suctioning and holding a plurality of products P. The second pickup mechanism 6 is then moved to a desired position by the transport actuator mechanism 7, which will be described later, for example, so as to transport the plurality of products P from the cutting table 2A, 2B onto the holding table 141.

### <Transport actuator mechanism 7>

As illustrated in FIG. 2, the transport actuator mechanism 7 moves the first pickup mechanism 3 at least between the substrate feeder mechanism 10 and the cutting table 2A, 2B, and moves the second pickup mechanism 6 at least between the cutting table 2A, 2B and the holding table 141.

As illustrated in FIG. 2, the transport actuator mechanism 7 extends in a straight line along the direction in which the two cutting tables 2A, 2B and the transfer table 5 are arranged (X direction), and includes the shared transfer shaft 71 for moving the first pickup mechanism 3 and the second pickup mechanism 6. The transfer shaft 71 is provided across a range by which the first pickup mechanism 3 can move above the substrate feeder unit 10b of the substrate feeder mechanism 10, and the second pickup mechanism 6 can move above the holding table 141 (see FIG. 2). Note that the transfer shaft 71 may be provided individually for each of the first pickup mechanism 3 and the second pickup mechanism 6.

The transport actuator mechanism 7 is enabled to move the first pickup mechanism 3 and the second pickup mechanism 6 in each of the X direction and the Z direction with respect to the transfer shaft 71. As actuator mechanisms for moving in these directions, an actuator mechanism using a rack and pinion mechanism, a ball screw mechanism, an air cylinder, or a linear motor, for example, may be used.

### <Specific configuration of cutting tables 2A, 2B>

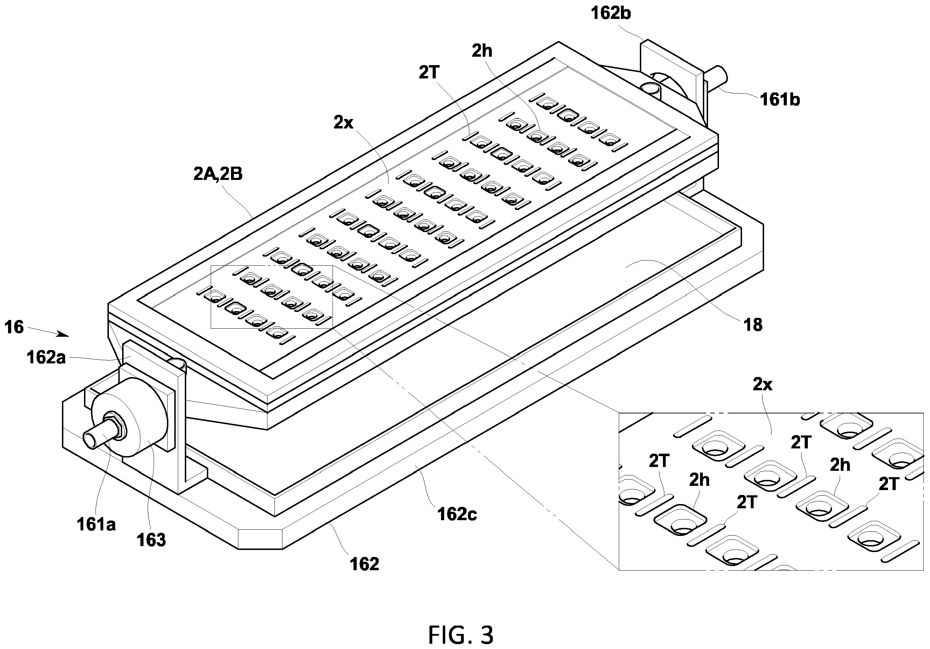

Specific configurations of the cutting tables 2A, 2B will now be described with reference to FIGS. 3 to 8.

### <Suctioning function of cutting tables 2A, 2B>

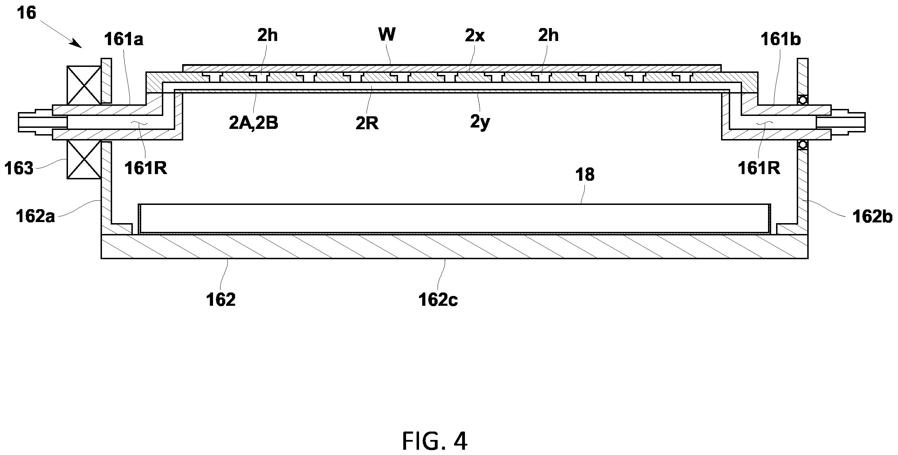

As illustrated in FIGS. 3 and 4, each of the cutting tables 2A, 2B is provided with a plurality of suction holes 2h through which the sealed substrate W can be suctioned, on one surface 2x. The plurality of suction holes 2h communicate with a suction channel 2R formed inside the cutting table 2A, 2B. The suction channel 2R is connected to a vacuum pump, not illustrated.

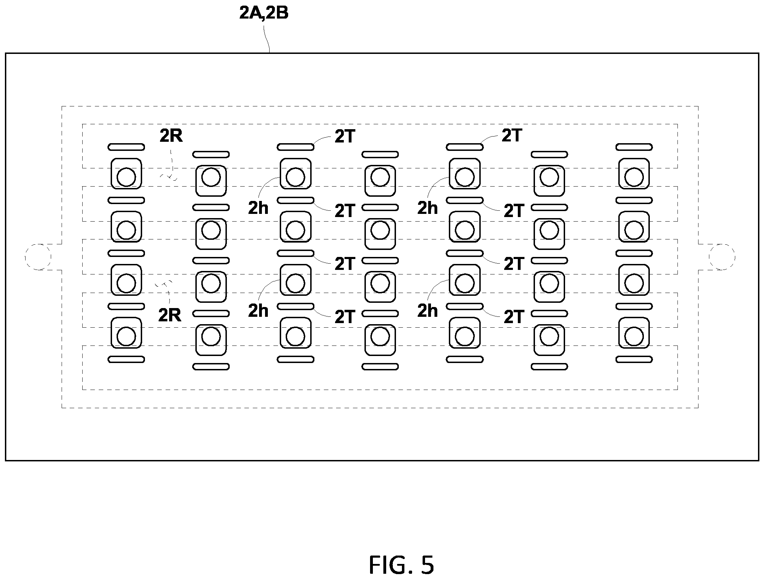

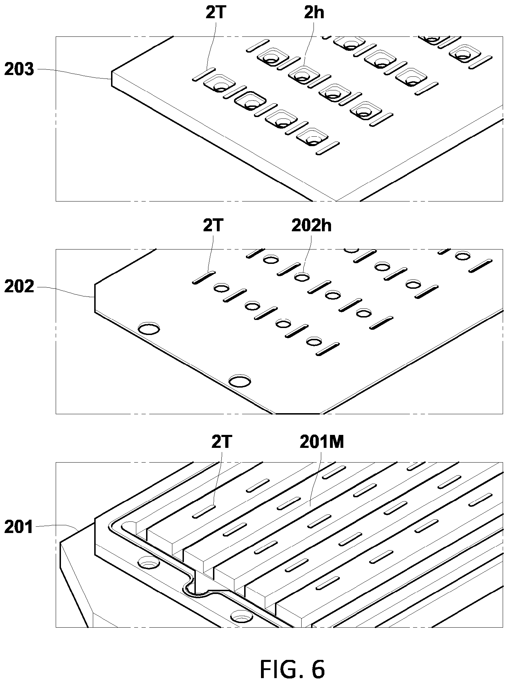

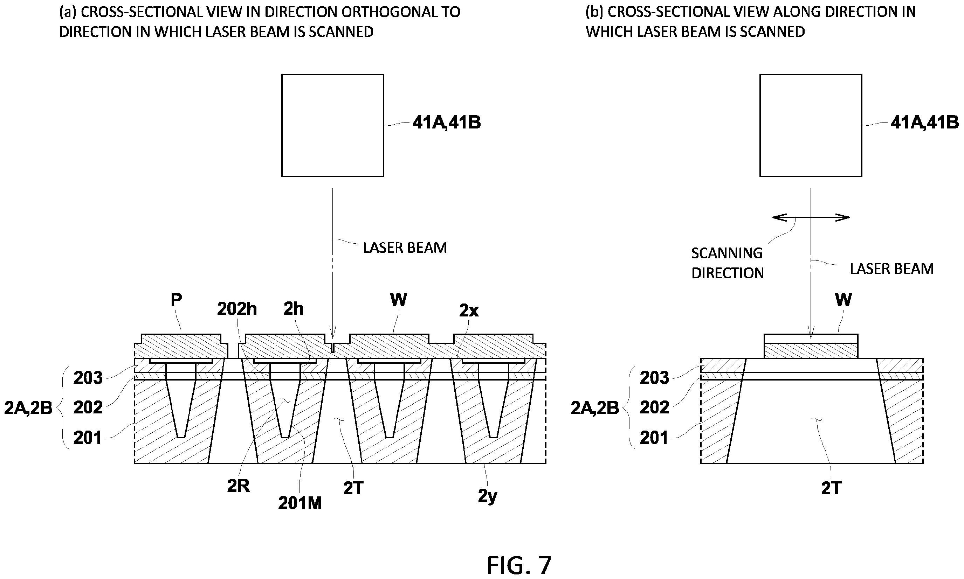

Specifically, as illustrated in FIG. 5, each of the cutting tables 2A, 2B has a substantially rectangular shape in a plan view. As illustrated in FIGS. 6 and 7, each of the cutting tables 2A, 2B includes: a base plate 201 that has grooves 201M forming the suction channel 2R, on the top surface of the base plate 201; a cover plate 202 that is provided on the top surface of the base plate 201 in a manner closing the grooves 201M, and that has suction through holes 202h communicating with the grooves 201M; and a suction rubber 203 that is made of resin and that is bonded to the top surface of the cover plate 202, and that has the suction holes 2h communicating with the suction through holes 202h, respectively. This suction rubber 203 prevents damages of the sealed substrate W and leakage, and enables the sealed substrate W to be fixed firmly, when the sealed substrate W is suctioned. The top surface of the suction rubber 203 serves as the one surface 2x of the cutting tables 2A, 2B, and the bottom surface of the base plate 201 serves as the other surface 2y of the cutting tables 2A, 2B.

### <Function for reversing cutting tables 2A, 2B>

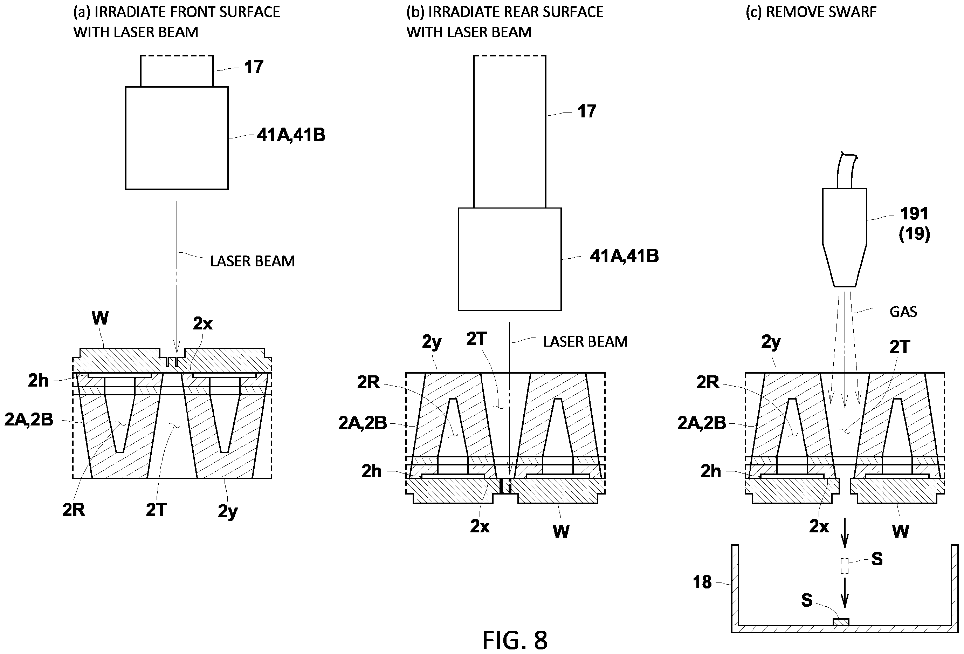

As illustrated in FIGS. 3 and 4, each of the cutting tables 2A, 2B is enabled to be turned over by a table reversing mechanism 16. The cutting table 2A, 2B is thus configured switchable between a configuration having one surface 2x facing upwards (facing the laser beam output unit 41A, 41B) (see FIG. 8(a)) and a configuration having the other surface 2y facing upwards (facing the laser beam output unit 41A, 41B) (see FIG. 8(b)).

As illustrated in FIGS. 3 and 4, the table reversing mechanism 16 rotatably supports two facing sides of the rectangular cutting table 2A, 2B. In this example, the table reversing mechanism 16 rotatably supports the longitudinal ends of the cutting table 2A, 2B. In this manner, it is possible to reduce the size of the space traversed by the cutting table 2A, 2B when the cutting table 2A, 2B is turned over. The cutting table 2A, 2B is also configured to be detachable from the table reversing mechanism 16, so that the cutting table 2A, 2B can be replaced to a special cutting table 2A, 2B depending on the shape of the sealed substrate W.

Specifically, the table reversing mechanism 16 includes two rotation shafts 161a, 161b that are provided at the respective longitudinal ends of the cutting tables 2A, 2B, a base member 162 that rotatably supports the rotation shafts 161a, 161b via bearings such as rolling bearings, and a rotation drive unit 163 such as a motor or a rotary cylinder that is provided to one of the rotation shafts 161, and is configured to turn over the cutting table 2A, 2B. The base member 162 has two support walls 162a, 162b that rotatably support the two rotation shafts 161, respectively, and a bottom wall 162c on which the two support walls 162a, 162b are provided. In the present embodiment, the one rotation shaft 161a is rotatably supported by the support wall 162a via the rotation drive unit 163.

The two rotation shafts 161a, 161b are provided, in a plan view, at the centers of the respective ends of the cutting tables 2A, 2B in the longitudinal direction. The two rotation shafts 161a, 161b have their centers of rotations on the same straight line, and extend in the horizontal direction. These two rotation shafts 161a, 161b extend in the longitudinal direction of the cutting tables 2A, 2B. Furthermore, at least one of the two rotation shafts 161a, 161b is provided with an internal channel 161R that communicates with the suction channel 2R formed inside the cutting tables 2A, 2B, as illustrated in FIG. 4, and the internal channel 161R is connected to a vacuum pump, not illustrated.

Note that the rotation center of the rotation shafts 161a, 161b may be matched with the center of the cutting table 2A, 2B, or with the center of the sealed substrate W being suctioned to the cutting tables 2A, 2B. With such a configuration, it is possible to reduce a change in the position of the sealed substrate W in the height direction, between before and after the sealed substrate W is turned over, so that it is possible to eliminate or to simplify adjustments of the relative position of the sealed substrate W with respect to the laser beam output units 41A, 41B.

### <Through openings 2T on cutting table 2A, 2B>

In the present embodiment, as illustrated in FIGS. 3 to 8, each of the cutting tables 2A, 2B is provided with a plurality of through openings 2T allowing the laser beam to pass through, in a manner penetrating from one surface 2x, where the suction holes 2h are provided, to the other surface 2y, which is on the rear side of the one surface 2x. In these through openings 2T, the laser beam output from the laser beam output units 41A, 41B of the cutting mechanism 4 cuts the sealed substrate W.

As illustrated in FIG. 5, the through openings 2T are provided in plurality, at positions not overlapping with the plurality of suction holes 2h, nor with the suction channel 2R (specifically, the grooves 201M on the base plate 201) communicating with the plurality of suction holes 2h, in a plan view of the cutting table 2A, 2B, that is, in a view of the cutting table 2A, 2B from the side of the one surface 2x.

The plurality of through openings 2T are provided at positions corresponding to the cut lines CL1, CL2 (see FIG. 1) of the sealed substrate W, and are provided so as to include the cut lines CL1, CL2 in the plan view of the cutting table 2A, 2B. Specifically, each of the through openings 2T is longer than the length of each of the cut lines CL1, CL2 in the cutting direction, and has a width greater than the kerf width to be removed between the packages. The through opening 2T also has such an opening size that the cutting table 2A, 2B is not irradiated with the laser beam emitted from the laser beam output units 41A, 41B.

In the present embodiment, because the cut lines CL1 on the strips W1 at the odd-numbered columns are aligned along the lines that are offset from the cut lines CL2 on the strips W2 at the even-numbered columns on the sealed substrate W, as illustrated in FIG. 2, the plurality of through openings 2T formed on the cutting tables 2A, 2B are aligned on the different straight lines, in the same manner, that is, the through openings 2T corresponding to the cut lines CL1 on the strips W1 in the odd-numbered columns are also aligned along the lines that are offset from the lines along which the through openings 2T corresponding to the cut lines CL2 on the strips W2 in the even-numbered columns are aligned (see FIG. 5).

As illustrated in FIGS. 7 and 8, each of the through openings 2T has a shape that gradually becoming larger from the one surface 2x, where the suction holes 2h are provided, toward the other surface 2y. Specifically, the through opening 2T has a shape that becoming larger from the one surface 2x toward the other surface 2y, in a cross section orthogonal to the direction in which the laser beam is scanned. Note that the through opening 2T may have any cross-sectional shape as long as irradiation with the laser beam is avoided; the through opening 2T may have a cross-sectional shape remaining constant, or may have a shape becoming larger stepwisely, from the one surface 2x toward the other surface 2y.

Further provided in the present embodiment is a position changing mechanism 17 for changing the relative position between the cutting table 2A, 2B and the laser beam output units 41A, 41B before and after the cutting table 2A, 2B is turned over, because the height position of the sealed substrate W changes, as illustrated in FIG. 8, when the cutting table 2A, 2B is turned over. The position changing mechanism 17 changes the relative positions of the cutting table 2A, 2B and the laser beam output units 41A, 41B to adjust the focal position of the laser beam to the sealed substrate W.

The position changing mechanism 17 may be provided in the machining head actuator mechanism 11 that moves the machining head 40 (see FIG. 2), and may be configured to change the height positions of the machining head 40 (laser beam output units 41A, 41B) before and after the cutting tables 2A, 2B are turned over. The position changing mechanism 17 may also be implemented using the machining head actuator mechanism 11. Note that the height positions of the cutting table 2A, 2B may be changed so that the height position remains the same before and after the cutting table 2A, 2B is turned over.

### <Swarf container 18>

As illustrated in FIGS. 3, 4, and 8(c), the cutting apparatus 100 according to this embodiment further includes a swarf container 18 that stores therein swarf S, such as waste material discharged by cutting the sealed substrate W. The swarf container 18 is provided below the cutting table 2A, 2B. Specifically, the swarf container 18 is provided between the two support walls 162a, 162b of the base member 162 that supports the cutting table 2A, 2B. The swarf container 18 is configured to be detachable from the base member 162, and removable from the base member 162 so that the swarf S can be disposed outside the cutting apparatus 100.

When the distance between the machining head 40 and the swarf container 18 is short, the energy density of the laser beam having passed through the through opening 2T may be still high, and the laser beam may scatter on the bottom surface of the swarf container 18. In order to suppress such scattering, a highly absorbable surface treatment may be applied to the bottom surface of the swarf container 18, or an absorber may be provided on the bottom surface of the swarf container 18.

### <Swarf removing mechanism 19>

The cutting apparatus 100 according to the present embodiment also includes a swarf removing mechanism 19 that removes swarf S such as an unwanted material remaining on the sealed substrate W machined with a laser beam, as illustrated in FIG. 8(c).

The swarf removing mechanism 19 includes a gas spraying unit 191 that blows gas such as compressed air toward the sealed substrate W, and is configured to remove the swarf S using the gas sprayed from the gas spraying unit 191. The gas spraying unit 191 is provided above the cutting table 2A, 2B, and is configured to remove the swarf S by blowing the gas toward the cutting table 2A, 2B from above. With this configuration, the gas sprayed from the gas spraying unit 191 passes through the through opening 2T, and is blown against the remaining swarf S. Because the gas goes through the through opening 2T, it is possible to blow the swarf S at high intensity, while increasing the flow velocity of the gas. The removed swarf S is collected in the swarf container 18 provided below the cutting table 2A, 2B. The swarf removing mechanism 19 may also be configured to remove the swarf S by blowing gas from above to the cutting table 2A, 2B before being turned over.

In addition to the configuration in which the gas is blown against the remaining swarf S as described above, the swarf removing mechanism 19 may also be configured to be physically brought into contact with the remaining swarf S and shove off the remaining swarf S. In this case, the swarf removing mechanism 19 includes a pushing member such as a pin that pushes the swarf S, and the swarf removing mechanism 19 shoves the swarf S off into the swarf container 18 by moving the pushing member up and down respect to the cutting table 2A, 2B.

### <One example of operation of cutting apparatus 100>

An example of the operation of the cutting apparatus 100 will now be explained. In this embodiment, the control unit CTL (see FIG. 2) is responsible for all operations and controls of the operations of the cutting apparatus 100, such as transportation of the sealed substrate W, cutting of the sealed substrate W, removal of swarf S, inspections of the products P, and housing of the products P in the trays.

The substrate feeder unit 10b in the substrate feeder mechanism 10 feeds the sealed substrate W housed inside the substrate housing 10a to the pickup position RP, where the first pickup mechanism 3 picks up the sealed substrate W.

The transport actuator mechanism 7 moves the first pickup mechanism 3 to the pickup position RP, and the first pickup mechanism 3 picks up the sealed substrate W by suctioning. The transport actuator mechanism 7 then moves the first pickup mechanism 3 holding the sealed substrate W to the cutting table 2A, 2B, and the first pickup mechanism 3 releases the sealed substrate W being held by suctioning, to place the sealed substrate W on the cutting tables 2A, 2B. The cutting table 2A, 2B then suctions to hold the sealed substrate W.

With the sealed substrate W suctioned, the cutting actuator mechanism 8A, 8B moves the cutting table 2A, 2B, to a predetermined cutting position (behind the transfer shaft 71). At this cutting position, the cutting tables 2A, 2B and the two laser beam output units 41A, 41B are moved in the X direction and the Y direction, by the cutting actuator mechanism 8A, 8B and the machining head actuator mechanism 11, respectively, whereby cutting and dicing the sealed substrate W. Note that the cutting table 2A, 2B is rotated by the rotating mechanism 9A, 9B, as required.

A specific cutting method will now be explained.

To begin with, after the sealed substrate W is suctioned and held on the cutting table 2A, 2B, the sealed substrate W and the laser beam output unit 41A, 41B are aligned (have their positions adjusted) with respect to each other. This alignment is achieved by using imaging data acquired by causing an alignment camera 20 to capture an image of alignment marks on the sealed substrate W.

The surface of the sealed substrate W is then irradiated with the laser beam from the laser beam output unit 41A, 41B, as illustrated in FIG. 8(a), and the sealed substrate W is partly cut and grooved (half-cut), without causing the table reversing mechanism 16 to reverse the cutting tables 2A, 2B. FIG. 8(a) illustrates an example in which two grooves are cut between the packages in order to match the kerf width achieved by blade cutting.

After the grooving, the table reversing mechanism 16 turns over the cutting table 2A, 2B, as illustrated in FIG. 8(b). After the cutting table 2A, 2B is reversed, no alignment (positional adjustment) is performed, and the imaging data obtained before the reversal of the cutting table 2A, 2B is used, by inverting the imaging data with respect to the rotation axis of the rotation shafts 161a, 161b. If the height position of the sealed substrate W has changed as a result of reversing the cutting table 2A, 2B, the position changing mechanism 17 adjusts the focal position of the laser beam onto the sealed substrate W, by changing the relative position between the cutting table 2A, 2B and the laser beam output unit 41A, 41B. The rear surface of the sealed substrate W is then irradiated with a laser beam output from the laser beam output units 41A, 41B and passed through the through openings 2T, to cut the grooved portion grooved by half-cutting completely (full cut). The swarf S such as the unwanted material resultant of the full cut falls into and is collected into the swarf container 18.

Before the laser beam output unit 41A, 41B is moved to a different cut line CL1, CL2 during the half cutting or the full cutting, the laser beam output unit 41A, 41B stop outputting the laser beam. The table reversing mechanism 16 may also repeat reversing the cutting table 2A, 2B a plurality of number of times in accordance with the type of the sealed substrate W, the cutting process, and the like.

After the cutting described above, as illustrated in FIG. 8(c), the gas spraying unit 191 of the swarf removing mechanism 19 is moved above the cutting table 2A, 2B, and blows the gas against the turned over cutting table 2A, 2B from above, to remove the swarf S. The swarf S removed by the swarf removing mechanism 19 falls and is collected into the swarf container 18. Before the swarf removing mechanism 19 is moved above the cutting tables 2A, 2B, the machining head actuator mechanism 11 may evacuate the laser beam output units 41A, 41B to the positions that do not interfere with the swarf removing mechanism 19.

After the swarf S is removed, the cutting actuator mechanism 8A, 8B moves the cutting table 2A, 2B to a predetermined transfer position (in front of the transfer shaft 71).

The transport actuator mechanism 7 then moves the second pickup mechanism 6 to the cutting table 2A, 2B for which the cutting has finished. The second pickup mechanism 6 then suctions the plurality of products P. The transport actuator mechanism 7 then moves the second pickup mechanism 6 holding the plurality of products P to the inspection unit 131. As a result, the bottom surfaces (mark surfaces) of the plurality of respective products P held by the second pickup mechanism 6 are subjected to the inspection of the inspection unit 131.

After the inspection, the transport actuator mechanism 7 moves the second pickup mechanism 6 to the reversing mechanism 14, to transport the plurality of products P to the reversing mechanism 14. After the mark surfaces of the plurality of respective products P are suctioned and held by the reversing mechanism 14, the products P are reversed. After the reversal, the reversing actuator mechanism moves the reversing mechanism 14, and the inspection unit 132 inspects the mounting surfaces of the respective products P. After the both surfaces are inspected in the manner described above, the reversing mechanism 14 passes the products P onto the transfer table 5. The transfer table 5 having the products P placed thereon is moved to the pickup position X2 by the transfer actuator mechanism 12. A sorting mechanism 15a then sorts the plurality of products P placed on the transfer table 5 onto the various trays T, based on the result of the inspection carried out by the inspection unit 13 (e.g., non-defective products and defective products).

### <Advantageous effects achieved by embodiment>

With the cutting apparatus 100 according to the present embodiment, because the cutting tables 2A, 2B are provided with the plurality of through openings 2T through which the laser beam is allowed to pass, when the part of the sealed substrate W corresponding to the through opening 2T is cut by being irradiated with the laser beam, the laser beam passes through the through opening 2T so that the laser beam does not hit the cutting tables 2A, 2B. As a result, it is possible to suppress damages of the cutting tables 2A, 2B due to being irradiated with a laser beam, to lessen the contaminants (impurities, foreign matters) becoming adhered to the sealed substrate W due to the damages, and to alleviate the restrictions imposed on the laser processing conditions for preventing damages of the cutting tables 2A, 2B. Because the restrictions imposed on the laser machining conditions can be alleviated, it becomes possible to use higher pulse energy and average output. Therefore, it is possible to shorten the machining time and to improve productivity, advantageously.

In addition, because the laser beam passes through the through opening 2T, it is possible to prevent the sealed substrate W from being irradiated with the laser beam reflected on the cutting tables 2A, 2B, and to prevent damages of the sealed substrate W caused by the laser beam reflected on the cutting tables 2A, 2B.

Furthermore, because the sealed substrate W can be machined from both sides of the sealed substrate W, by turning over the cutting tables 2A, 2B with the sealed substrate W suctioned thereto, it is possible to reduce the machining time, and to improve the productivity.

In addition, by collecting a measurement of the amount of the positional shift resultant of turning over the cutting tables 2A, 2B once in advance, it becomes possible to correct the position after the reversal, through calculation. Therefore, it is not necessary to align the amount of shift (adjust the position) every time a workpiece is turned over. Therefore, the alignment (positional adjustment) of the laser beam output units 41A, 41B with respect to the sealed substrate W is required only once after the sealed substrate W is suctioned, and this also contributes in the reduction in the machining time and improvement in the productivity.

In addition, because the through opening 2T becomes larger toward the other surface 2y, the laser beam emitted from the one surface 2x and passed through the sealed substrate W does not hit the inner surface of the through opening 2T. In addition, even when the cutting table 2A, 2B is turned over and the laser beam is emitted from the side of the other surface 2y, the laser beam does not hit the inner surface of the through opening 2T, either. As a result, it is possible not only to suppress the damages of the cutting tables 2A, 2B caused by the laser beam hitting the cutting tables 2A, 2B, but also to prevent deterioration of the quality of the sealed substrate W, caused by the reflected laser beam hitting an unintended area of the sealed substrate W.

### <Other modifications>

Note that the present invention is not limited to the embodiment described above.

For example, the two cutting tables 2A, 2B according to the embodiment described above have the plurality of through openings 2T at the same position. However the plurality of cutting tables 2A, 2B may have the plurality of through openings 2T at different positions. With this configuration, it is possible to machine the sealed substrate W with a laser beam on one cutting table 2A, and then to reload the sealed substrate W onto the other cutting table 2B, to have the sealed substrate W machined at another positions. Furthermore, it becomes possible to implement a configuration in which two types of sealed substrates having different product layouts are subjected to laser processing using the two cutting tables, respectively.

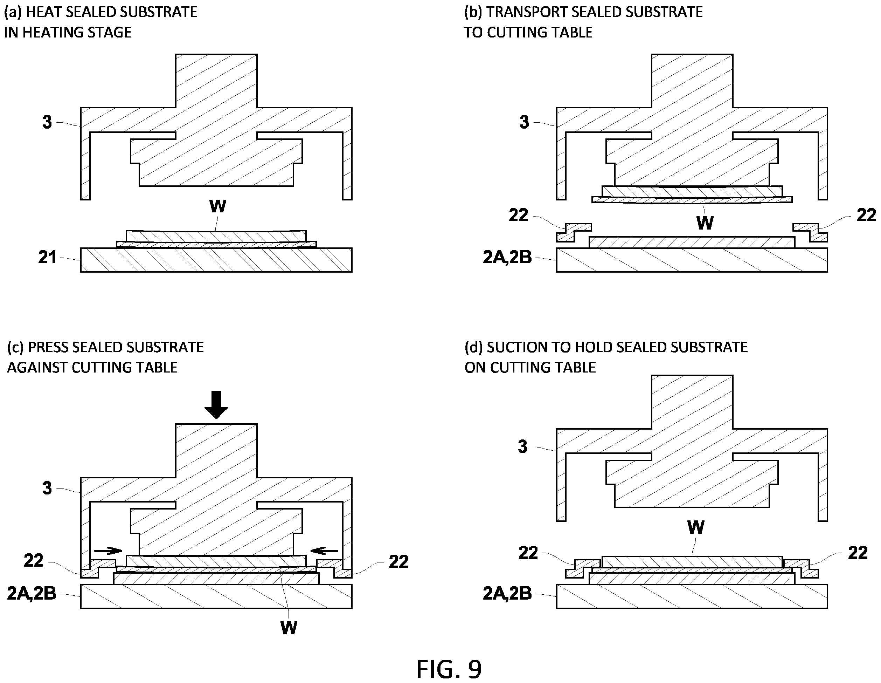

As illustrated in FIG. 9, a heating stage 21 that heats the sealed substrate W before being conveyed to the cutting tables 2A, 2B may be further provided. The heating stage 21 having the sealed substrate W placed thereon heats and softens the sealed substrate W, to facilitate deformation. A transport mechanism (loader) including the first pickup mechanism 3 and the transport actuator mechanism 7 according to the embodiment is then configured to transport the sealed substrates W to the heating stage 21, and transport the sealed substrate W from the heating stage 21 to the cutting table 2A, 2B. At this time, the transport mechanism may be configured to press the sealed substrate W against the cutting tables 2A, 2B when the sealed substrate W is placed on the cutting tables 2A, 2B.

Furthermore, in addition to the configurations according to the embodiment described above, the cutting table 2A, 2B may further include a pressing unit 22 that presses both ends (longitudinal sides) of the sealed substrate W against the cutting table 2A, 2B, as illustrated in FIG. 9. The pressing unit 22 may be a clamp member, for example, and is provided slidably or rotatably with respect to the cutting table 2A, 2B.

The sealed substrate W is then placed on the cutting table 2A, 2B while the pressing unit 22 is open. By closing the pressing unit 22, the pressing unit 22 is enabled to press the sealed substrate W against one surface 2x of the cutting tables 2A, 2B. The opened configuration and the pressing configuration of the pressing unit 22 may be switched by bringing the first pickup mechanism 3 (loader) into contact therewith, or it is also possible to provide a separate driving unit to drive the pressing unit 22. A laser displacement meter for checking a warpage of the sealed substrate W suctioned and held by the cutting table 2A, 2B may also be provided.

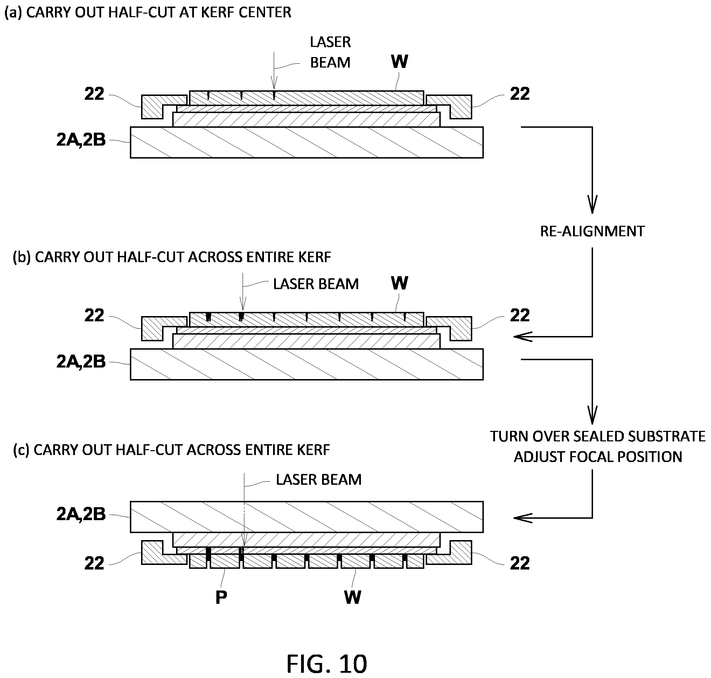

In addition, as illustrated in FIG. 10, it is also possible to correct the warpage of the sealed substrate W by causing the laser beam output units 41A, 41B to half-cut (groove) the central part of the kerf while the sealed substrate W is being pressed by the pressing unit 22, so that the sealed substrate W is made easily deformable. In this case, the alignment (position adjustment) may be performed again, because the position of the sealed substrate W may change. Thereafter, similarly to the embodiment described above, the entire kerf is half-cut from the front surface side of the sealed substrate W, the cutting table 2A, 2B is turned over, and then the kerf is half-cut from the rear surface side of the sealed substrate W to full-cut the sealed substrate.

The cutting apparatus 100 according to the embodiment described above cuts the sealed substrate W by turning over the cutting table 2A, 2B; however, depending on the type of the sealed substrate W, for example, the sealed substrate W may be cut only from the front side without turning over the cutting tables 2A, 2B, or the sealed substrate W may be cut only from the rear side by turning over the cutting tables 2A, 2B.

On the sealed substrates W according to the embodiment described above, the cut lines CL1 on the strip W1 are aligned along the lines that are different from those that the cut lines CL2 on the strip W2 are aligned, the strip W2 being adjacent to the strip W1. However, the cut lines CL1 and CL2 may also be aligned along the same straight lines. In this case, the plurality of through openings 2T provided to the cutting tables 2A, 2B are aligned along the same lines corresponding to the respective cut lines CL1, CL2. At this time, a plurality of through openings 2T provided on the same single line may be integrated into one through opening.

Described above in the embodiment is an example of a cutting apparatus using a twincutting table structure including two cutting tables, and a twin-laser configuration including two laser beam output units; however, the present invention is not limited thereto, and the cutting apparatus may also have a single-cutting table structure including one cutting table and a singlelaser configuration including one laser beam output unit, or a single-cut table structure including one cutting table and a twin-laser configuration including two laser beam output units, for example.

In FIGS. 7 and 8 according to the embodiment described above, every through opening 2T has a shape becoming larger from one surface 2x toward the other surface 2y, across the entire cutting tables (machining tables) 2A, 2B. However, the present invention is not limited thereto, and at least a part of the through opening 2T may have a shape that becomes larger from the one surface 2x toward the other surface 2y. For example, the base plate 201, positioned lowermost before the cutting table 2A, 2B is turned over, may have the through opening 2T the shape of which becomes larger from the one surface 2x toward the other surface 2y.

Furthermore, the machining apparatus according to the present invention may perform machining other than cutting, and for example, may perform other types of machining such as milling and grinding.

In addition, the present invention is not limited to the embodiment described above, and it should be needless to say that various modifications may be made within the scope not departing from the gist of the present invention.

### Industrial Applicability

According to the present invention, it is possible to suppress damages of a machining table caused by the laser beam, and to alleviate the restrictions imposed on the laser processing conditions for preventing damages to the machining table.

### Reference Signs List

- 100: cutting apparatus (machining apparatus)
- W: sealed substrate (workpiece)
- P: product (machined article)
- 2A, 2B: cutting table (machining table)
- 2h: suction hole
- 2x: one surface
- 2y: other surface
- 3: first pickup mechanism (transport mechanism)
- 41A, 41B: laser beam output unit
- 7: transport actuator mechanism (transport mechanism)
- 17: position changing mechanism
- 18: swarf container
- 19: swarf removing mechanism
- 21: pressing unit
- 22: heating stage

## Claims

1. A machining apparatus comprising:
a machining table that is enabled to be turned over and that has one surface provided with a plurality of suction holes allowing a workpiece to be suctioned; and
a laser beam output unit that machines the workpiece suctioned on the machining table by irradiating the workpiece with a laser beam, wherein
the machining table has a plurality of through openings through which the laser beam is allowed to pass, from one surface to another surface of the machining table.

2. The machining apparatus according to claim 1, wherein each of the plurality of through openings has a shape that becomes larger from the one surface toward the other surface.

3. The machining apparatus according to claim 1 or 2, further comprising a position changing mechanism that changes a relative position between the machining table and the laser beam output unit before and after the machining table is turned over.

4. The machining apparatus according to any one of claims 1 to 3, further comprising a swarf removing mechanism that removes swarf remaining on the workpiece having been machined with the laser beam.

5. The machining apparatus according to any one of claims 1 to 4, further comprising a swarf container that collects swarf resultant of machining with the laser beam, the swarf container being disposed below the machining table.

6. The machining apparatus according to any one of claims 1 to 5, further comprising a plurality of the machining tables having the plurality of through openings at different positions, respectively.

7. The machining apparatus according to any one of claims 1 to 6, further comprising a pressing unit that presses both ends of the workpiece toward the machining table.

8. The machining apparatus according to any one of claims 1 to 7, further comprising:
a transport mechanism that transports the workpiece to the machining table; and
a heating stage that heats the workpiece before being transported onto the machining table, wherein
the transport mechanism conveys the workpiece heated by the heating stage to the machining table.

9. The machining apparatus according to any one of claims 1 to 8, wherein the workpiece is a resin-sealed electronic element fixed to a support body.

10. A method for manufacturing a machined article, the method comprising manufacturing a machined article using the machining apparatus according to any one of claims 1 to 9.

11. The method for manufacturing a machined article according to claim 10, wherein the workpiece is cut from both sides by turning the machining table holding the workpiece upside down, and by irradiating the workpiece with a laser beam.
